# EUROPEAN PATENT SPECIFICATION

(11) **EP 2 312 037 B1**
(45) Date of publication and mention of the grant of the patent: **14.08.2013**
(21) Application number: 09762628.7
(22) Date of filing: 08.06.2009
(51) Int. Cl.: D06F 33/02, D06F 39/00, D06F 35/00

(54) **DISINFECTING WASHING METHOD FOR DRUM WASHING MACHINE**
DESINFIZIERENDES WASCHVERFAHREN FÜR TROMMELWASCHMASCHINE
PROCÉDÉ DE LAVAGE DÉSINFECTANT POUR UNE MACHINE À LAVER À TAMBOUR

(30) Priority: 09.06.2008 KR 20080053878
(43) Date of publication of application: 20.04.2011
(73) Proprietor: Daewoo Electronics Corporation, Seoul 100-031 (KR)
(72) Inventor: YOO, Jae Hee, Seoul 157-745 (KR)
(74) Representative: Michalski Hüttermann & Partner Patentanwälte
(86) International application number: PCT/KR2009/003055
(87) International publication number: WO 2009/151241

(56) References cited:
- EP-A2- 1 696 066
- WO-A1-2006/101362
- KR-A- 20050 065 722
- KR-A- 20050 122 049
- KR-A- 20060 054 887
- KR-A- 20070 074 941
- KR-A- 20080 022 962

## Description

### [Technical Field]

The present invention relates to a drum washing machine and, more particularly, to a disinfecting washing method for a drum washing machine that can remove bacteria, ticks and the like with steam.

### [Background Art]

Generally, a washing machine is used to wash laundry through washing, rinsing and spin-drying cycles according to a preset algorithm, and is categorized into a pulsator type, an agitator type, and a drum type according to a washing manner.

A drum washing machine is widely used due to advantages such as lower damage of laundry and minimal use of wash water as compared with other types. Recently, the drum washing machine has been developed to have various new functions to satisfy user demands for multi-functionality and complete automation while corresponding to a technological trend toward home automation.

For example, the drum washing machine can perform a drying cycle for drying laundry without performing a washing cycle, a boiling washing cycle for sterilizing and removing bacteria and ticks from laundry using heated wash water, and the like, as well as a fundamental washing process including a washing cycle, a rinsing cycle, and a spinning cycle.

WO 2006/101362 A1 discloses a novel washing method of a washing machine that is capable of performing a washing operation of laundry with reduced washing water consumption and low power consumption and, in addition, sterilizing the laundry. The washing method includes supplying washing water containing detergent into a tub to perform a high-concentration washing process, and, before or after the high-concentration washing process, supplying steam into a drum.

EP 1 696 066 A2 discloses a washing machine and a washing method thereof, in which waste of washing water is reduced and washing efficiency is improved. The washing method includes the steps of determining the volume of laundry in a tub, setting a first water level for a preliminary washing stroke and a second water level for a main washing stroke based on the determined volume of laundry, carrying out the preliminary washing stroke using washing water of the first water level and steam, and converting the preliminary washing stroke into the main washing stroke based on washing water of the second water level depending on an inner temperature of the tub.

Here, it should be noted that the above description is not given for illustration of a conventional technique to which the present invention pertains, but for understanding of the background of the present invention.

### [Disclosure]

### [Technical Problem]

In boiling washing, wash water is heated to 85° C-90 ° C by a heater of the drum washing machine and is used to wash laundry, thereby sterilizing the laundry while removing ticks therefrom. In this case, the drum washing machine heats the same amount of wash water as used in a general washing operation and washes the laundry with the heated wash water for a long duration, thereby entailing problems such as high power consumption and fabric damage.

Therefore, there is a need to solve such problems of the drum washing machine.

The present invention is conceived to solve the problems as described above, and an aspect of the present invention is to provide a disinfecting washing method for a drum washing machine that performs a washing operation using hot steam to remove bacteria, ticks and the like from laundry with low power consumption.

### [Technical Solution]

In accordance with one aspect of the present invention, a disinfecting washing method for a drum washing machine includes: generating steam to increase an inner temperature of a drum to a first target temperature, wherein the generation of steam is performed within a first time limit; performing steam washing while rotating the drum, with the inner temperature of the drum maintained at the first target temperature or more supplying wash water into the drum and heating the wash water; determining whether the temperature of the wash water reaches a second target temperature within a second time limit; and performing main washing while rotating the drum, in particular after completing the steam washing, if the temperature of the wash water reaches the second target temperature within the second time limit, wherein operation of the washing machine is determined as an error and an alarm is issued to indicate the error, if the inner temperature of the drum does not reach the first target temperature within the first time limit or if the temperature of the wash water does not reach the second target temperature within the second time limit.

When the first target temperature is 90° C, the first time limit may be 20 minutes. The first target temperature may be 70° C.

When the first target temperature is 90° C, the steam washing may be performed for 20-25 minutes.

### [Advantageous Effects]

As apparent from the above description, according to one embodiment of the invention, a small amount of wash water is heated to generate steam, which in turn is used to remove bacteria or ticks from laundry, thereby enabling reduction in power and wash water consumption.

Further, according to one embodiment of the invention, main washing is performed after steam washing, thereby reducing fabric damage due to hot wash water.

### [Description of Drawings]

The above and other aspects, features, and advantages of the present invention will become apparent from the following detailed description in conjunction with the accompanying drawings, in which:
Fig. 1 is a block diagram of a drum washing machine according to one embodiment of the present invention; and
Fig. 2 is a flowchart of a disinfecting washing method for a drum washing machine according to one embodiment of the present inventiont.

### [Best Mode]

Hereinafter, exemplary embodiments of the present invention will be described in detail with reference to the accompanying drawings.

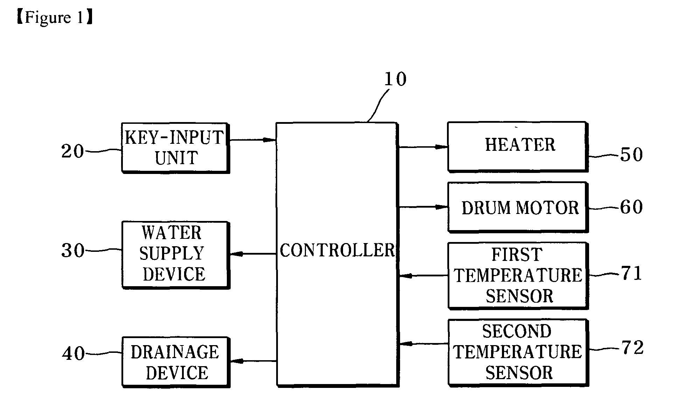

Referring to Fig. 1, which is a block diagram of a drum washing machine according to one embodiment of the invention, the drum washing machine according to this embodiment includes a controller 10, a key-input unit 20, a water supply device 30, a drainage device 40, a heater 50, a drum motor 60, and first and second temperature sensors 71,72.

The key-input unit 20 generates a variety of key signals according to user manipulation. The key-input unit 20 includes a variety of keys to perform a washing cycle, a rinsing cycle, a drying cycle, a sterilizing cycle and the like of the drum washing machine, and for controlling operation time and wash water temperature in each cycle. Therefore, the drum washing machine can selectively perform such various cycles through key manipulation of a user.

The water supply device 30 supplies wash water for each cycle of the drum washing machine. The water supply device 30 includes a valve (not shown) which is provided to a water supply hose to be opened and closed in response to a control signal from the controller 10, and a water supply motor (not shown) which forces wash water to be supplied into the drum through the hose.

The drainage device 40 drains contaminated wash water from the drum washing machine after completing the washing cycle, rinsing cycle, drying cycle, sterilizing cycle, or the like. The drainage device 40 includes a valve (not shown) which is provided to a drain hose to be opened and closed in response to a control signal from the controller 10, and a drain motor (not shown) which forces the wash water to be drained from a tub to an outside of the washing machine through the hose.

As such, the water supply device 30 generally includes the water supply hose, the valve, the water supply motor, and the like. Further, the drainage device 40 generally includes the drain hose, the valve, and the drain motor, and the like. Here, the water supply motor and the drain motor are selectively employed according to capacity and structure of the drum washing machine. For example, the drain motor is employed in the case where a drainage port is located higher than the drum. Thus, the drain motor need not be employed in the case where the drainage port is located lower than the drum.

The heater 50 heats wash water supplied into the drum by the water supply device 30 in response to the control signal from the controller 10. In this embodiment, the heater 50 is located at a lower portion of the tub to heat the wash water when the wash water is supplied in a predetermined amount into the tub by the water supply device 30. However, it should be noted that the location of the heater is not limiting of the present invention and can be changed as needed.

The drum motor 60 rotates the drum in response to a control signal from the controller 10.

The first temperature sensor 71 detects an inner temperature of the drum and sends the detection result to the controller 10, and the second temperature sensor 72 detects the temperature of wash water and sends the detection result to the controller 10.

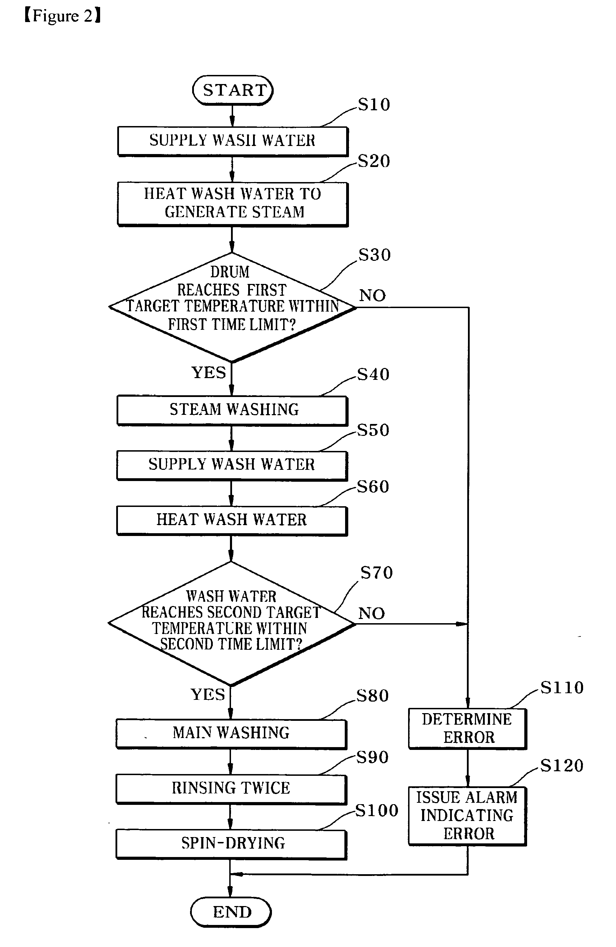

The controller 10 generally controls the drum washing machine according to this embodiment. When a washing control command is input to the controller 10 through manipulation of the key-input unit 20 by a user, the controller 10 controls the water supply device 30 to supply wash water into the washing machine. Further, the controller 10 controls the heater 50 to heat the wash water supplied by the water supply device 30 according to the inner temperature of the drum and the temperature of the wash water sent from the first and second temperature sensors 71 and 72, while controlling the drive motor 60 to perform a washing operation. Operation of the drum washing machine according to this embodiment will be described in detail with reference to Fig. 2.

Fig. 2 is a flowchart of a disinfecting washing method for the drum washing machine according to one embodiment of the present invention.

The disinfecting washing method for the drum washing machine according to this embodiment includes steam generating in S10~S30, steam washing in S40, and main washing in S50~S100. Further, the steam generating in S10~S30 and the main washing in S50~S100 include determining operation of the washing machine as an error in S110 and issuing an alarm to indicate the error in S 120.

When a washing control command is input through the key-input unit 20 by a user, the controller 10 controls the water supply device 30 to supply wash water into the drum in S10. Then, the wash water is contained in the tub and the heater 50 is controlled to heat the wash water and generate steam in S20.

Additionally, it is determined in S30 whether an inner temperature of the drum input from the first temperature sensor 71 has reached a first target temperature within a first time limit. If the inner temperature of the drum has reached the first target temperature within the first time limit, the drum motor 60 is driven to perform the steam washing in S40.

The steam washing is performed to wash laundry with steam in the drum. The steam washing is performed for a preset period of time while maintaining the inner temperature of the drum in a steam washing temperature range. In other words, during the steam washing, the heater 50 is selectively turned on/off as needed to maintain the inner temperature of the drum in the steam washing temperature range.

After completing the steam washing, the water supply device 30 is controlled to supply wash water into the drum in S50, and the heater 50 is turned-on to heat the wash water supplied into the drum in S60.

Then, it is determined in S70 whether the temperature of the wash water input from the second temperature sensor 72 has reached a second target temperature within a second time limit. If the temperature of the wash water has reached the second target temperature within the second time limit, the drum motor 60 is driven to perform main washing while maintaining the temperature of the wash water in a main washing temperature range, in S80.

Here, the main washing is performed by rotating the drum after supplying the wash water into the drum, which is different from the steam washing.

The main washing is performed for a preset washing period according to a predetermined washing method. The washing period and the washing method are set according to the kind and the amount of laundry, the amount of wash water, the capacity of the drum washing machine, and the like. This is apparent to those skilled in the art and a detailed description thereof will be omitted herein.

After completing the main washing, a rinsing cycle is performed, for example, twice to rinse the laundry by supplying wash water into the drum and rotating the drum in S90, and a spin-drying cycle is performed by rotating the drum at a high speed to remove moisture from the laundry in S100, followed by terminating control of the washing operation.

In the above process, if the inner temperature of the drum does not reach the first target temperature within the first time limit or if the temperature of the wash water does not reach the second target temperature within the second time limit, such a determination result is determined as an error in operation of the washing machine in S 110, and an alarm is issued to indicate the error in S120. In other words, when the inner temperature of the drum or the temperature of the wash water does not reach the first or second target temperature due to malfunction of a heater or the like even after a time for reaching the first or second target temperature elapses, the operation of the washing machine is determined as an error, so that a user can take immediate action in response to this error.

Table 1 shows variation in temperature of laundry and the drum when the first target temperature is set to 90° C.

**Table 1**

| | | 0 | 20 minutes | 30 minutes | 45 minutes |
|---|---|---|---|---|---|
| First target temperature: 90° C Drum motor (On/Off): 10/5 sec | Laundry Temperature | 22.7° C | 52.2° C | 70.8° C | 71.7° C |
| | Inner temperature of drum | 21.2° C | 91.2° C | 91.4° C | 92.0° C |

In general, the temperature of laundry must be maintained at 70° C or more for 10 minutes or more to sterilize the laundry. Therefore, the inner temperature of the drum receiving the laundry must be 70° C or more in order to provide satisfactory sterilizing effect.

Referring to Table 1, in an initial state, the drum has an inner temperature of 21.2° C and laundry has a temperature of 22.7° C. The inner temperature of the drum reaches 91.2° C and the temperature of the laundry reaches 52.2° C, 20 minutes after wash water is heated to generate steam and raise the inner temperature of the drum.

When the inner temperature of the drum reaches a first target temperature of 90° C, the washing machine is controlled to maintain the inner temperature of the drum. Here, since the inner temperature of the drum is higher than the temperature of the laundry, the temperature of the laundry continues to increase. Then, when 30 minutes elapses from the initial state, that is, 10 minutes after the inner temperature of the drum reaches the first target temperature, the temperature of the laundry reaches 70.8° C. Further, when 45 minutes elapses from the initial state, that is, 25 minutes after the inner temperature of the drum reaches the first target temperature, the temperature of the laundry reaches 71.7° C.

As such, steam washing is performed for 25 minutes once the inner temperature of the drum reaches the first target temperature, while for 15 minutes of the 25 minutes the laundry is maintained at 70 ° C or above, thereby fulfilling the aforementioned sterilization conditions and providing satisfactory sterilization effects.

Therefore, when the steam washing is performed for 25 minutes while rotating the drum after the inner temperature of the drum reaches the first target temperature, sufficient sterilization of the laundry can be achieved.

On the other hand, according to this embodiment of the invention, the inner temperature of the drum reaches 91.2° C, which is higher than the first target temperature, when 20 minutes elapses from the initial state. Thus, if the inner temperature of the drum does not reach 90° C when 20 minutes elapses from the initial state, the operation of the washing machine is determined as an error and an alarm is issued to inform a user of the error.

Table 2 shows the number of strains in laundry before and after steam washing as described above. In Table 2, a sterilization ratio (%) is defined as [(A-B)/A]x100 where A and B indicate the number of strains before and after the steam washing, respectively.

**Table 2 (Unit: CFU/sample)**

| Test strain | A | B | sterilization ratio |
|---|---|---|---|
| Escherichia coli (E. coli) | 1.0x10⁸ | 8.6 x10⁴ | 99.9% |
| Staphylococcus aureus (S. aureus) | 1.2x10⁸ | 2.2 x10⁵ | 99.8% |

Referring to Fig. 2, when the test strain was Escherichia coli, the number of strains in laundry was 1.0x10⁸ CFU/sample before the steam washing, and the number of strains in laundry was 8.6x10⁴ CFU/sample after the steam washing. Therefore, the sterilization ratio was 99.9%. Further, when the test strain was Staphylococcus aureus, the number of strains in laundry was 1.2x10⁸ CFU/sample before the steam washing, and the number of strains in laundry was 2.2x10⁵ CFU/sample after the steam washing. Therefore, the sterilization ratio was 99.8%. As a result, it can be seen that the steam washing according to this embodiment of the invention provides sufficient sterilization effects.

Table 3 shows power and wash water consumption compared between one embodiment of the present invention and a conventional disinfecting washing method.

**Table 3**

| | Power consumption (kWh) | Comparison of power consumption (%) | Amount of used water (L) | Comparison of amount of used water (%) |
|---|---|---|---|---|
| Inventive washing operation | 1.436 | 46.8 | 71.5 | 70.3 |
| Comparative washing operation | 3.069 | 100 | 101.7 | 100 |

In Table 3, the disinfecting washing method for the drum washing machine according to one embodiment of the invention is compared with conventional boiling washing in terms of power consumption and amount of wash water used. In the disinfecting washing method according to this embodiment, steam washing was performed for 25 minutes with the inner temperature of the drum maintained at 90° C, followed by main washing, two rinsing cycles, and a spin-drying cycle.

When each drum washing machine has a capacity of 12kg, the drum washing machine according to one embodiment of the invention exhibited power consumption of 1.436 kWh and used 71.5 L of wash water for disinfecting washing, and the comparative drum washing machine exhibited power consumption of 3.069 kWh and used 101.7 L of wash water for conventional boiling washing.

As a result, it can be seen that the drum washing machine according to this embodiment exhibited reduced power consumption and amount of used water by 53.2% and 29.7%, respectively, as compared with the comparative drum washing machine. As such, when the steam washing is performed before the main washing, it is possible to remove various bacteria from laundry while reducing power consumption and the amount of wash water used for disinfecting washing.

## Claims

1. A disinfecting washing method for a drum washing machine, comprising:
generating steam to increase an inner temperature of a drum to a first target temperature, wherein the generation of steam is performed within a first time limit;
performing steam washing while rotating the drum, with the inner temperature of the drum maintained at the first target temperature or more;
supplying wash water into the drum and heating the wash water;
determining whether the temperature of the wash water reaches a second target temperature within a second time limit; and
performing main washing while rotating the drum if the temperature of the wash water reaches the second target temperature within the second time limit,
wherein operation of the washing machine is determined as an error and an alarm is issued to indicate the error, if the inner temperature of the drum does not reach the first target temperature within the first time limit or if the temperature of the wash water does not reach the second target temperature within the second time limit.

2. The disinfecting washing method according to claim 1, wherein when the first target temperature is 90° C, the first time limit is 20 minutes.

3. The disinfecting washing method according to claim 1 or 2, wherein the first target temperature is 70°C.

4. The disinfecting washing method according to claims 1 to 3, wherein when the first target temperature is 90°C, the steam washing is performed for 20 to 25 minutes.

## Patentansprüche

1. Desinfizierendes Waschverfahren für eine Trommelwaschmaschine mit folgenden Schritten:
Erzeugen von Dampf zur Erhöhung einer Innentemperatur einer Trommel auf eine erste Solltemperatur, wobei die Dampferzeugung innerhalb einer ersten Frist durchgeführt wird,
Durchführen eines Dampfwaschens, während sich die Trommel dreht, wobei die Innentemperatur der Trommel auf der ersten Solltemperatur oder darüber gehalten wird,
Zuführen von Waschwasser in die Trommel und Erhitzen des Waschwassers,
Bestimmen, ob die Temperatur des Waschwassers eine zweite Solltemperatur innerhalb einer zweiten Frist erreicht, und
Durchführen eines Hauptwaschens, während sich die Trommel dreht, falls die Temperatur des Waschwassers die zweite Solltemperatur innerhalb der zweiten Frist erreicht,
wobei bestimmt wird, dass der Betrieb der Waschmaschine fehlerhaft ist, und zalarm zur Angabe des Fehlers gegeben wird, wenn die Innentemperatur der Trommel die erste Solltemperatur nicht innerhalb der ersten Frist erreicht oder die Temperatur des Waschwassers die zweite Solltemperatur nicht innerhalb der zweiten Frist erreicht.

2. Desinfizierendes Waschverfahren nach Anspruch 1, wobei die erste Frist 20 Minuten beträgt, wenn die erste Solltemperatur 90°C beträgt.

3. Desinfizierendes waschverfahren nach Anspruch 1 oder 2, wobei die erste Solltemperatur 70°C beträgt.

4. Desinfizierendes Waschverfahren nach Ansprüchen 1 bis 3, wobei das Dampfwaschen 20 bis 25 Minuten lang durchgeführt wird, wenn die erste Solltemperatur 90°C beträgt.

## Revendications

1. Procédé de lavage désinfectant pour une machine à laver à tambour, comprenant :
générer de la vapeur pour augmenter une température interne d'un tambour à une première température cible, la génération de vapeur étant effectuée dans une première limite de temps ;
réaliser un lavage à la vapeur tout en faisant tourner le tambour, la température interne du tambour étant maintenue à la première température cible ou plus ;
fournir de l'eau de lavage dans le tambour et chauffer l'eau de lavage ;
déterminer si la température de l'eau de lavage a atteint une deuxième température cible dans une deuxième limite de temps ; et
effectuer un lavage principal tout en faisant tourner le tambour si la température de l'eau de lavage atteint la deuxième température cible dans la deuxième limite de temps,
le fonctionnement de la machine à laver étant déterminé comme défaillant et une alarme étant émise pour indiquer la panne si la température interne du tambour n'atteint pas la première température cible dans la première limite de temps ou si la température de l'eau de lavage n'atteint pas la deuxième température cible dans la deuxième limite de temps.

2. Procédé de lavage désinfectant selon la revendication 1, dans lequel, lorsque la première température cible est de 90°C, la première limite de temps est de 20 minutes.

3. Procédé de lavage désinfectant selon la revendication 1 ou 2, dans lequel la première température cible est de 70°C.

4. Procédé de lavage désinfectant selon les revendications 1 à 3, dans lequel lorsque la première température cible est de 90°C, le lavage à la vapeur est effectué pendant 20 à 25 minutes.
